# EUROPÄISCHE PATENTSCHRIFT

(11) **EP 0 351 014 B1**
(45) Veröffentlichungstag und Bekanntmachung des Hinweises auf die Patenterteilung: **24.01.1996**
(21) Anmeldenummer: 89201818.5
(22) Anmeldetag: 10.07.1989
(51) Int. Cl.: H04L 12/56, H04Q 11/04

(54) **Koppelfeld für ein Vermittlungssystem**
Switching network for a switching system
Réseau de commutation pour système de commutation

(30) Priorität: 14.07.1988 DE 3823878
(43) Veröffentlichungstag der Anmeldung: 17.01.1990
(73) Patentinhaber: Philips Patentverwaltung GmbH, D-22335 Hamburg (DE); Philips Electronics N.V., NL-5621 BA Eindhoven (NL)
(72) Erfinder: Killat, Ulrich, Dr., D-2000 Hamburg 56 (DE); Krüger, Johann, Dipl.-Ing., D-2085 Quickborn (DE)
(74) Vertreter: Peuckert, Hermann, Dipl.-Ing.

(56) Entgegenhaltungen:
- WO-A-86/02510

## Beschreibung

Die Erfindung bezieht sich auf ein Koppelfeld für ein nach dem asynchronen Zeitvielfachverfahren Blöcke übertragendes Vermittlungssystem, welches
- jeweils Pufferspeicher zwischen Zubringerleitungen und Abnehmerleitungen enthält,
- jeweils einen einem Pufferspeicher zugeordneten Vergleicher enthält, der bei einer Übereinstimmung der Adresse der Abnehmerleitung mit einer Wegelenkungsinformation zur Erzeugung eines Signals zum Einschreiben eines Blockes in den Pufferspeicher vorgesehen ist, und
- eine Entscheiderschaltung enthält, die jeweils zur Festlegung der Auslesereihenfolge von Blöcken aus Pufferspeichern bei mehrfacher Übereinstimmung von Adresse und Wegelenkungsinformation vorgesehen ist.

In Kommunikationsnetzen nimmt der Anteil des zu übertragenden Datenverkehrs ständig zu. Zur Bewältigung des Datenverkehrs wurden Vermittlungssysteme getrennt für den Daten- und den Fernsprechverkehr aufgebaut. Da die Datenrate der zu übertragenden Datensignale eine Vielzahl von unterschiedlichen Werten annehmen kann ist es schwierig, Daten- und Fernsprechvermittlung in einem Netzknoten zu vereinen.

Im Rahmen der Entwicklung zukünftiger, integrierter Breitbandnetze wird diskutiert, nach welchem Verfahren die digitale oder analoge Information - zum Teil mit hohem Bandbreitebedarf - in digitalen Netzen übertragen werden soll. Schon lange bekannt ist die Paketvermittlung (Packet Switching), bei der der (digitale) Nachrichtenstrom in einzelne Pakete aufgeteilt wird. In jedem Paket sind neben der Nutzinformation Zusatzinformationen enthalten, u.a. Angaben über das Ziel (Adresse). Dadurch lassen sich Nachrichten aufgrund ihrer Paketadressen zu einem an der Verbindung beteiligten Partner lenken, was nur dann Übertragungskapazität erfordert, wenn tatsächlich eine Nachricht zu übermitteln ist.

Weiterhin ist seit langem die Leitungsvermittlung (Circuit Switching) bekannt, welche Übertragungskapazität für die gesamte Verbindungsdauer erfordert, unabhängig davon, ob gerade Nachrichten übermittelt werden oder nicht. Insbesondere beim Fernsprechnetz werden doppelt gerichtete Übertragungswege zur Verfügung gestellt, obwohl im allgemeinen nur einer der beiden Fernsprechteilnehmer spricht.

Bisher führte die Anwendung der Paketvermittlung beim Datenverkehr zu Durchsatzraten in der Größenordnung von 1000 Paketen je Sekunde und darüber. Für künftige Dienste unter Benutzung des Verfahrens der Paketvermittlung, beispielsweise bei der Bildkommunikation, rechnet man heute bereits mit der tausendfachen Menge. Um solche Durchsatzraten zu erreichen, wird beim "Fast Packet Switching" die zeitaufwendige Behandlung der Protokolle vom eigentlichen Durchschaltevorgang getrennt und die Pakete werden nach ihren Zieladressen auf die Übertragungswege verteilt. Zum Beschleunigen des Durchschaltevorgangs in den Koppelnetzen dienen stark vereinfachte Protokolle, die sich sehr schnell auswerten lassen. Am Eingang des Vermittlungsknotens werden die ankommenden Datenpakete dezentral verarbeitet, indem diese entsprechend ihrem Ziel eine interne Adreßinformation erhalten, über das zentrale Koppelnetz durchgeschaltet und am Ausgang dann ohne die interne Adreßinformation weitergeleitet werden.

Die von der CCITT-Studienkommission XVIII herausgegebene "Draft Recommendation I" beschreibt den "Asynchronous Transfer Mode". Beim "Synchronous Transfer Mode" wird ein bestimmter Übertragungskanal allein durch seinen zeitlichen Abstand von einem Synchronwort identifiziert. Beim "Asynchronous Transfer Mode" wird der jeweilige Kanal durch die Adressen (Header) seiner Pakete (Blöcke) gekennzeichnet, insbesondere ist der Anfang der Blöcke zu erkennen, damit sich die Header auswerten lassen. Hierzu werden Flags oder eine unterlegte Synchronstruktur verwendet, die eine konstante Blocklänge voraussetzt. Ein Beispiel hierfür ist "Asynchronous Time Division", bei dem immer wieder Synchronwörter als "Leerblöcke" in den Bitstrom eingeblendet werden.

Praktische Bedeutung dürften zunächst hybride Konfigurationen mit Kombination von "Synchronous Transfer Mode" und "Asynchronous Transfer Mode" erlangen, da der Netzbetreiber aufgrund der hohen Investitionskosten die bereits bestehenden, nach dem "Synchronous Transfer Mode" aufgebauten Netze so lange wie möglich weiterbenutzen will.

In der europäischen Patentanmeldung mit der Veröffentlichungsnummer 0 183 592 wurde ein Breitband-Vermittlungssystem vorgeschlagen, bei dem die Nachricht in Blöcke (Cells) zerlegt wird und diese über breitbandige Übertragungswege nach einem asynchronen Zeitvielfachverfahren übertragen werden. Die Blöcke (Cells) können gleiche oder unterschiedliche Länge aufweisen. Die Blöcke bestehen aus Nutz- sowie aus Adressinformation, wobei die Adressinformation in einem sogenannten Blockkopf (Header) untergebracht ist. Die Anzahl der Bits eines Blocks wird als dessen Länge bezeichnet, wobei in den Standardisierungsvorschlägen hierfür Werte zwischen 120 und 256 Bits für die Nutzinformation und 32 oder 16 Bits für den Header vorgesehen sind. Die Zeitintervalle, in denen Blöcke übertragen werden, werden als Rahmen (Frames) bezeichnet. Dabei kann ein Rahmen einen gültigen Block enthalten oder leer sein. Zwischen zwei Teilnehmern des Breitband-Vermittlungssystems besteht eine "virtuelle Verbindung" (virtual connection), welche dadurch aufrechterhalten wird, daß die von den Teilnehmereinrichtungen abgesandten Blöcke mit eindeutigen Header-Kennungen versehen werden, die den Vermittlungsknoten das korrekte Weiterleiten der Blöcke gestatten. Die im Vermittlungsknoten ankommenden Blöcke von einer eingehenden Leitung werden unter Umsetzung des Headers auf eine ausgehende Leitung übertragen. Da während eines Rahmens zwei oder mehrere Blöcke für die gleiche Ausgangsleitung eintreffen können, müssen im Vermittlungsknoten sogenannte Wartepuffer vorgesehen werden. Im Wartepuffer werden einer oder mehrere dieser Blöcke solange zwischengespeichert, bis für diese ein freier Rahmen zur Verfügung steht.

Hinsichtlich der Wartepufferanordnung können die Vermittlungsknoten zentralgepufferte Systeme (wie beispielsweise aus der europäischen Patentanmeldung mit der Veröffentlichungsnummer 0 183 592 bekannt) oder dezentral gepufferte Systeme sein. Bei zentral gepufferten Systemen gibt es nur einen Puffer, in dem jede eingehende Leitung ihre ankommenden Blöcke ablegt und aus dem jede abgehende Leitung die für sie bestimmten Blöcke wieder ausliest. Systeme mit dezentraler Pufferung werden dahingehend unterschieden, ob eine Pufferung von Blöcken ausschließlich auf der Eingangsseite (eine Ausführungsform hierfür ist beispielsweise in der deutschen Patentanmeldung P 37 14 385.9 beschrieben) erfolgt oder ob die Puffer ausschließlich vor den abgehenden Leitungen (vgl. beispielsweise IEEE, B 10.2.1, 1987, "The Knockout Switch: A Simple, Modular Architecture for High-Performance Packet Switching von J.S. Yeh et al) angeordnet sind oder ob es sich um Systeme mit Eingangs- und Ausgangspufferung handelt. Hier spricht man auch von Koppelfeldpufferung, wenn jedem Koppelpunkt einer Koppelmatrix ein Puffer zugeordnet ist.

Wie die vorstehenden Ausführungen zeigen, erfordert die Ausgestaltung des Koppelfelds für einen Vermittlungsknoten eines Breitband-Vermittlungssystems langwierige Untersuchungen und besondere Überlegungen, um die vielfältigen Abhängigkeiten und deren gegenseitigen Beeinflussungen zu berücksichtigen. Außerdem ist zu berücksichtigen, daß die Schaltungstechnologie für die betrachteten Koppelfelder an den Grenzen der gegenwärtigen Halbleiterschaltzeiten liegt. Insbesondere können Leistungsengpässe auftreten, wenn mehrere Blöcke gleichzeitig durch das Koppelnetz einer Vermittlungsanlage geschickt werden. Die Blöcke können sich gegenseitig beeinflussen, wenn in dem Koppelnetz weniger Zwischenleitungen als notwendige Wege zur Verfügung stehen. Zwei Arten der Beeinflussung sind dabei von besonderer Bedeutung: der Konflikt und die Behinderung.

Zwei Blöcke (bzw. die sie aussendenden Schaltungen) stehen im Konflikt zueinander, wenn für die Übertragung die gleichen Schaltungsteile benutzt werden sollen. In der Regel wird dann einer der Blöcke gegenüber dem anderen priorisiert und der andere Block muß entweder warten oder geht verloren.

Bei der Behinderung muß ein Block V auf die Bedienung eines Blocks U warten, wobei gleichzeitig aber der Block U nicht bedient wird, weil ein Konflikt zwischen Block U und einem dritten Block W auftritt. Somit ist eine normale Wartesituation in einem Wartepuffer keine Behinderung, solange der erste Block in dem Puffer in jedem Rahmentakt übertragen wird. Erst wenn dieser in einen Konflikt tritt und nicht bedient wird, dadurch gleichzeitig aber auch kein anderer Block in diesem Wartepuffer übertragen werden kann, tritt eine Behinderung auf.

Der Begriff der Behinderung ist für die Leistungsbewertung solcher Systeme wichtig. Denn wenn ein nicht leerer Wartepuffer während einer Rahmenzeit nicht abgearbeitet werden kann, so kann man sich vorstellen, daß stattdessen ein zusätzlicher "virtueller" Block bearbeitet wird. Die Summe aus virtueller und realer Last ergibt dann die gesamte Belastung des Systems. Die virtuelle Last kann bei einigen Koppelfeldern nahezu so groß werden wie die reale Last. Dieses gilt vor allem für Koppelfelder, die die Eingangspufferung verwenden.

In der DE-PS 37 43 685.6 ist ein Koppelfeld mit Eingangspufferung vorgeschlagen worden, welches aus einem Sammelschienensystem mit zeilenweise angeordneten Zubringerleitungen und spaltenweise angeordneten Abnehmerleitungen nach Art eines Raummultiplex-Koppelfeldes aufgebaut ist. Zur Auswertung der im Blockkopf enthaltenen Informationen ist jeder Koppelpunkt mit einer eigenen Auswertelogik versehen. Am Eingang eines jeden Koppelpunktes ist ein Eingangspuffer vorgesehen, der die über die Zubringerleitung zugeführten Blöcke aufnimmt und speichert, bis sie auf eine der Abnehmerleitungen gelangen. Die Anzahl der Eingangspuffer entspricht der Anzahl der Abnehmerleitungen. Die vom Teilnehmer oder vom vorangegangenen Vermittlungsknoten empfangenen Rahmen stehen rechtsbündig im Eingangspuffer. Mittels eines jedem Koppelpunkt zugeordneten Vergleichers wird die in einem Speicher gespeicherte Adresse der spaltenweise angeordneten Abnehmerleitungen mit der im Blockkopf enthaltenen in einem Schieberegister gespeicherten Weglenkungs-Information verglichen. Zu diesem Zweck ist das Schieberegister an der Ausgangsseite des Pufferspeichers einerseits mit dem Vergleicher und andererseits mit dem Koppelpunkt verbunden. Jeder der Abnehmerleitungen ist eine Entscheiderschaltung zugeordnet, welche im Falle gleicher Weglenkungs-Informationen die Reihenfolge der durchzuschaltenden Zubringerleitungen festlegt. Die Reihenfolge wird durch die räumliche Anordnung der Zubringerleitungen bestimmt, wobei jede Entscheiderschaltung alle ihr zugeordneten Vergleicher zyklisch abfragt.

Bei dieser Vermittlungseinrichtung enthalten die einer Abnehmerleitung zugeordneten Pufferspeicher Daten, die nicht für diese Abnehmerleitung bestimmt sind. Bei einer Anzahl von n Abnehmerleitungen werden im Mittel (n-1/n)x100% aller Pufferplätze auf diese Art und Weise unnötig mit Daten belegt. Diese Pufferplätze müssen jedoch vorhanden sein, weshalb wesentlich mehr Pufferplatz vorzusehen ist als eigentlich erforderlich wäre.

Das eingangs erwähnte Koppelfeld ist aus der WO-A-8 602 510 bekannt. Bei diesem Koppelfeld ist die Anzahl der Pufferplätze gegenüber den vorher erwähnten Dokumenten wesentlich vermindert, und es sind nur Pufferplätze für solche Daten vorgesehen, welche über die zugehörige Abnehmerleitung weitergeleitet werden sollen. Über Zubringerleitungen eintreffende Blöcke werden nach einer Überprüfung der Wegeinformation (tag) in einen einer Abnehmerleitung zugeordneten Pufferspeicher eingeschrieben. Aus den Pufferspeichern werden die Blöcke mittels wenigstens einer Entscheiderschaltung (arbitrator) ausgelesen. Hierbei kann jeder Pufferspeicher gleichmäßig bedient werden. Bestimmte Blöcke können auch priorisiert behandelt werden.

Bei gleichmäßiger Verteilung des Verkehrsaufkommens einer Abnehmerleitung über alle Zubringerleitungen ist das mit der Entscheiderschaltung ausführbare Verfahren als optimal anzusehen. Jedoch wird in der Praxis die Gleichverteilung des Verkehrsaufkommens über die Zubringerleitungen eher die Ausnahme als die Regel sein. Man muß vielmehr aufgrund des asynchronen Charakters der Blockerzeugung auch damit rechnen, daß durch momentane Verkehrsspitzen auf wenigen Zubringerleitungen die zugehörigen Pufferspeicher zum Überlaufen gebracht werden.

Der Erfindung liegt daher die Aufgabe zugrunde, ein Koppelfeld zu schaffen, das auch bei Vekehrsspitzen ein Überlauf von Pufferspeichern weitgehend verhindert wird.

Diese Aufgabe wird durch ein Koppelfeld der eingangs genannten Art dadurch gelöst,
daß die Entscheiderschaltung zur Festlegung der Auslesereihenfolge der Blöcke aus den Pufferspeichern anhand der Anzahl der in den jeweiligen Pufferspeichern gespeicherten Blöcke vorgesehen ist.

Bei dem erfindungsgemäßen Koppelfeld ist ein Überlauf von Pufferspeichern bei Vekehrsspitzen weitgehend verhindert, da die Anzahl der pro Pufferspeicher gespeicherten Blöcke von der Entscheiderschaltung geprüft wird, und anhand der Anzahl der in den Pufferspeichern gespeicherten Blöcke die Auslesereihenfolge festgelegt wird. Hierbei werden dann stärker belastete Pufferspeicher häufiger als weniger belastete Pufferspeicher ausgelesen.

Ein Ausführungsbeispiel für eine solche Entscheiderschaltung ist in den Ansprüchen 10 bis 13 aufgeführt.

Weitere Ausgestaltungen der Erfindung sind in den anderen Unteransprüchen angegeben.

Es zeigen:
- Fig. 1: eine Ausführungsform einer Baueinheit für ein Koppelfeld.
- Fig. 2: eine Ausführungsform einer Entscheiderschaltung.
- Fig. 3: eine andere Ausführungsform einer Entscheiderschaltung.
- Fig. 4: ein weiteres Beispiel einer Ausführungsform einer Entscheiderschaltung.
- Fig. 5: ein weiteres Beispiel einer Ausführungsform einer Entscheiderschaltung
- Fig. 6: ein Ausführungsbeispiel für eine Verteilanordnung.

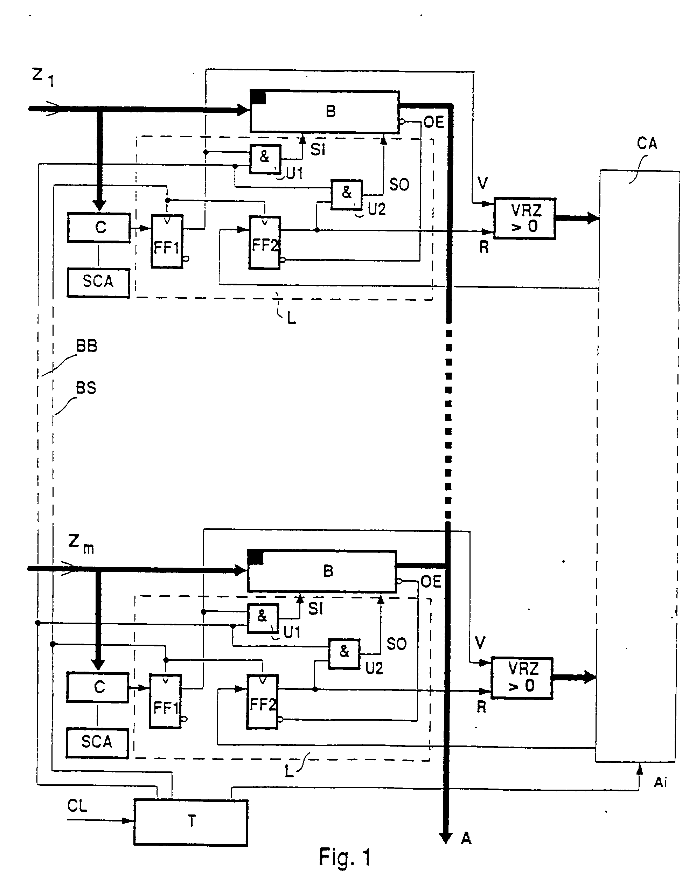

Fig. 1 zeigt eine Ausführungsform einer Baueinheit für ein Koppelfeld mit Pufferspeichern B. An die Baueinheit sind eingangsseitig m Zubringerleitungen Z1...Zm anschließbar. Die auf ihnen ankommenden Blöcke können auf eine Abnehmerleitung A weitergeleitet werden. Die Baueinheit ist mit Vorteil auch als Konzentrator einsetzbar, da sie die Konzentrierung der Datenströme von m Zubringerleitungen auf eine einzige Leitung durchführen kann. An jeder Zubringerleitung Z1...Zm ist ein Vergleicher C angeschlossen sowie ein Pufferspeicher B. Die Ausgänge der Pufferspeicher B sind alle mit der Abnehmerleitung A dieser Baueinheit verbunden. Mittels der Taktschaltung T werden aus einem Eingangstakt Cl die für die zeitliche Steuerung der Baueinheit notwendigen Taktsignale erzeugt. Es wird angenommen, daß die ankommenden Blöcke auf den Eingangstakt Cl beziehungsweise auf das aus diesem abgeleitete Block-Startsignal BS synchronisiert sind. An den Vergleichseingängen der Vergleicher C ist jeweils ein Adressenspeicher SCA angeschlossen, in dem die Adresse der zugehörigen Abnehmerleitung A gespeichert ist. Das die Adresse der Abnehmerleitung A kennzeichnende Bitmuster ist für alle Vergleicher gleich.

Mit dem Pufferspeicher B ist eine Steuerlogikschaltung L verbunden. Diese weist ein erstes Flip-Flop FF1 und ein erstes UND-Gatter U1 auf. Der Setzeingang des Flip-Flops FF1 ist mit dem Ausgang des Vergleichers C verbunden, dem Takteingang des Flip-Flops FF1 wird ein in der Taktgeberschaltung T erzeugtes Blockstartsignal BS zugeführt. Der Ausgang des Flip-Flops FF1 ist mit dem Vorwärtszähleingang V des Vorwärts-Rückwärts-Zählers VRZ verbunden, dessen Ausgangssignal der Entscheiderschaltung CA zugeführt wird. Ferner ist der nichtinvertierende Ausgang des Flip-Flops FF1 mit einem ersten Eingang des ersten UND-Gatters U1 verbunden. Dem zweiten Eingang des UND-Gatters U1 wird ein in der Taktschaltung T erzeugtes Blocksynchronisiersignal BB angelegt. Der Ausgang des ersten UND-Gatters U1 ist mit dem Einschreib-Steuereingang des Eingangspuffers B verbunden. Die Steuerlogikschaltung L enthält ferner ein zweites Flip-Flop FF2 sowie ein zweites UND-Gatter U2. Dem ersten Eingang des UND-Gatters U2 ist ebenfalls das Blocksynchronisiersignal BB zugeführt, während der Takteingang des Flip-Flops FF2 das Blockstartsignal BS zugeführt erhält. Der nichtinvertierende Ausgang des zweiten Flip-Flops FF2 ist einerseits mit dem zweiten Eingang des UND-Gatters U2 und andererseits mit dem Rückwärtszähleingang R des Vorwärts-Rückwärts-Zählers VRZ verbunden. Der Ausgang des zweiten UND-Gatters U2 ist an den Eingang des Pufferspeichers B angeschlossen, über den das Auslesen des Pufferspeichers ausgelöst werden kann (Lese-Steuereingang). ). Der invertierende Ausgang des Flip-Flops FF2 ist mit einem Eingang des Pufferspeichers B verbunden, über den das Auslesen des Pufferspeichers verhindert werden kann (Lese-Sperr-eingang).

Für die Funktion der Schaltungsanordnung sei zunächst angenommen, daß die Daten auf den Zubringerleitungen Z1...Zm alle auf den Blockanfang synchronisiert sind. Jeder Vergleicher C vergleicht fortlaufend die auf der zugehörigen Zubringerleitung ankommenden Daten mit der im Speicher SCA gespeicherten Adresse für die Abnehmerleitung A. Synchronisiert mit dem Blockstartsignal BS beim Auftreten der Wcglenkungsinformation wird das Ergebnis im ersten Flip-Flop FF1 gespeichert. Bei einer Übereinstimmung der Weglenkungsinformation mit der im Speicher SCA gespeicherten Adresse der Abnehmerleitung A öffnet durch den dann vorliegenden Kennzustand am nichtinvertierenden Ausgang des ersten Flip-Flops FF1 das erste UND-Gatter U1, an dem gleichzeitig das von der Taktschaltung T gelieferte Blocksynchronisiersignal BB anliegt. Hierdurch wird das Einschreibsignal SI erzeugt, welches bewirkt, daß die auf der Zubringerleitung ankommenden Daten in den Pufferspeicher B eingeschrieben werden. Mit dem Ausgangssignal des ersten Flip-Flops FF1 wird gleichzeitig der Zähler VRZ inkrementiert. Der Zähler VRZ ist in der in Fig. 1 dargestellten bevorzugten Ausführungsform als Vorwärts-Rückwärts-Zähler ausgebildet. Das Ausgangssignal des Zählers VRZ ist einem Eingang der Entscheiderschaltung CA zugeführt. Diese Entscheiderschaltung CA regelt die Reihenfolge, in der die Puffersspeicher B die in ihnen gespeicherten Daten auf die Abnehmerleitung A absetzen können.

Entscheidet die Entscheiderschaltung CA beispielsweise, daß die von der Zubringerleitung Z1 gelieferten Daten aus dem zugehörigen Pufferspeicher B ausgelesen werden sollen, so gibt sie ein entsprechendes Signal an das zugehörige zweite Flip-Flop FF2 ab. Der dann am nichtinvertierenden Ausgang des Flip-Flops FF2 vorhandene Kennzustand liegt einerseits am UND-Gatter U2 an, dessen zweiten Eingang ebenfalls das Blocksynchronisiersignal BB zugeführt wird. Dadurch wird das zweite UND-Gatter U2 durchlässig und gibt ein Auslesesignal SO an den Pufferspeicher B ab, der daraufhin die in ihm gespeicherten Daten an die Abnehmerleitung A abgibt. An den übrigen Pufferspeichern B dieser Baueinheit, die an die Zubringerleitungen Z2...Zm angeschlossen sind, liegt währenddessen ein vom invertierenden Ausgang des jeweils zugeordneten zweiten Flip-Flops FF2 abgegebenes Auslese-Sperrsignal OE an, so daß diese Pufferspeicher nicht ausgelesen werden. Durch das am Rückwärtszähleingang R des Zählers VRZ anliegende Ausgangssignal des Flip-Flops FF2 wird der Zähler VRZ zurückgesetzt, sobald der Pufferspeicher B aktiviert wird.

Die Entscheiderschaltung CA arbeitet also mit den Zählerständen der Zähler VRZ. In Abhängigkeit von der Art der Zählerinformation kann die Zuteilung der Abnehmerleitung A in unterschiedlicher Weise erfolgen.

Eine erste vorteilhafte Ausgestaltung besteht darin, daß der Zähler VRZ nur ein Signal abgibt, das anzeigt, daß der Zählerstand größer Null ist. Ein Signal am Ausgang des Zählers, das anzeigt, daß der Zählerstand gleich Null ist, wird nicht besonders ausgewertet. Es läßt sich dann erreichen, daß die Pufferspeicher, in denen Nachrichten gespeichert sind, zyklisch einen Block auf die Abnehmerleitung A absetzen können.

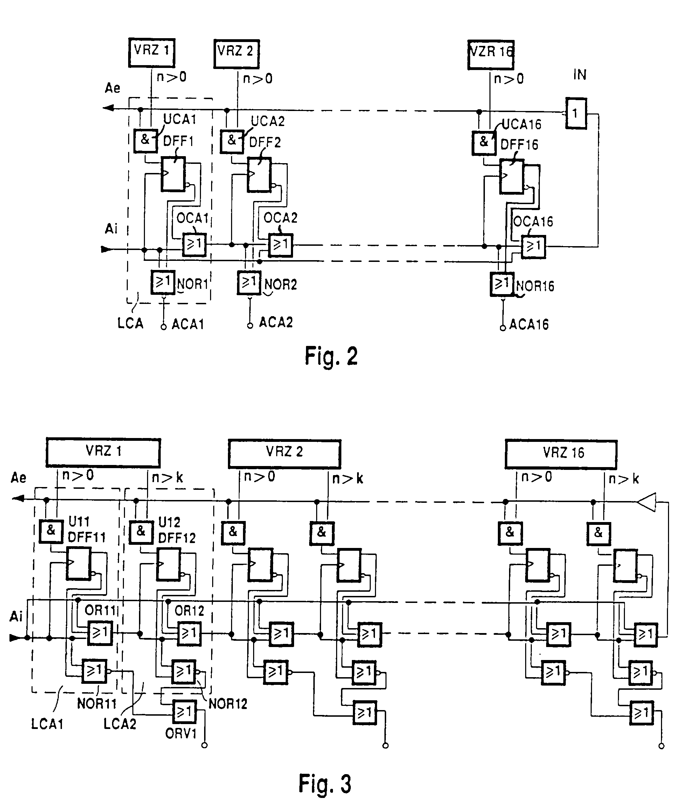

Eine hierfür geeignete Ausführungsform einer Entscheiderschaltung CA für ein Koppelfeld für sechzehn Eingangsleitungen ist in Fig. 2 dargestellt. Eine solche Entscheiderschaltung CA ist aus einzelnen gleich aufgebauten Logikschaltungen LCA zusammengesetzt, wobei je eine solche Logikschaltung an den Ausgang eines Zählers angeschlossen ist. Die dem Zähler VRZ1 zugeordnete Logikschaltung weist ein flankengetriggertes D-Flip-Flop DFF1 auf, an dessen D-Eingang der Ausgang eines UND-Gatters UCA1 angeschlossen ist, wobei am ersten Eingang dieses UND-Gatters UCA 1 jeweils der Ausgang des als Vorwärts-Rückwärts-Zähler ausgebildeten Zählers VRZ1 angeschlossen ist. Der invertierende Ausgang deses D-Flip-Flops DFF1 ist mit einem NOR-Gatter NOR1 und der nichtinvertierende Ausgang dieses D-Flip-Flops DFF1 mit einem ODER-Gatter OCA1 verbunden. Die Ausgänge der NOR-Gatter bilden die Ausgänge ACA1, ACA2... der Entscheiderschaltung CA und sind mit entsprechenden Eingängen der Steuerlogikschaltungen der Pufferspeicher der in Fig. 1 gezeigten Schaltungsanordnung verbunden. Da die Takteingänge der D-Flip-Flops DFF2...DFF16 über ein ODER-Gatter jeweils mit dem nichtinvertierenden Ausgang des jeweils vorangehenden D-Flip-Flops DFF1...DFF15 verbunden sind, können die einzelnen D-Flip-Flops als in Serie liegend betrachtet werden.

An einem ersten Takteingang der Entscheiderschaltung CA liegt ein in der Taktschaltung T erzeugtes Serienschaltsignal Ai an. Eine positive Flanke von Ai wird erzeugt, nachdem die Ergebnisse der Vergleicher C in die Vorwärts-Rückwärtszähler VRZ übertragen wurden. Das Signal Ai wird in der Entscheiderschaltung CA einem Eingang aller ODER-Gatter OCA1 bis OCA 16 zugeführt und außerdem dem Takteingang des ersten D-Flip-Flops DFF1. Das an einem Ausgang der Entscheiderschaltung CA auftretende vom Ausgang des ODER-Gatters OCA 16 abgegebene Ausgangssignal ist unter Zwischenschaltung eines Inverters IN an einen weiteren Eingang der Entscheiderschaltung CA als Serienschaltsignal Ae zurückgeführt und liegt an den zweiten Eingängen der UND-Gatter U1...U16 an. Es ist außerdem weiteren Entscheiderschaltungen im Vermittlungssystem zuführbar.

Im folgenden soll die Funktionsweise der vorstehend beschriebenen Entscheidungslogik näher erläutert werden.

Es wird davon ausgegangen, daß gerade ein Zyklus abgearbeitet ist und an den Eingängen der Entscheiderschaltung die neue Eingangsinformation aus den Vorwärts-Rückwärts-Zählern VRZ1...VRZ16 anliegt. Das Serienschaltsignal Ai weist den logischen Kennzustand "LOW" auf und alle D-Flip-Flops DFF1...DFF16 haben diesen logischen Kennzustand "LOW" gespeichert. Damit liegt an jedem zweiten Eingang der UND-Gatter UCA1...UCA16 ein Serienschaltsignal Ae mit dem logischen Kennzustand "HIGH" an und die UND-Gatter sind durchgeschaltet, wenn die zugehörigen Zähler den Ausgangszustand größer Null aufweisen.

Tritt nun eine positive Flanke im Serienschaltsignal Ai auf, so durchläuft dieses Signal mit einer durch die Laufzeit in der ODER-Schaltung OCA16 verursachten Gatter-Verzögerung die Entscheiderschaltung CA und die Eingangsdaten werden in die D-Flip-Flops DFF1...DFF16 übernommen, so daß jedes Flip-Flop, dessen zugehöriger Zähler den Ausgangszustand größer als Null aufwies, nun an seinem nichtinvertierenden Ausgang den Kennzustand "HIGH" hat. Nach der Verzögerung durch den Inverter IN geht das Serienschaltsignal Ae in den logischen Kennzustand "LOW" und alle UND-Gatter UCA1 bis UCA16 sind "disabled". Nach einer Zeit, die ausreicht, um ein D-Flip-Flop zu takten, geht das Serienschaltsignal Ai in den logischen Kennzustand "LOW" über. Diese negative-Flanke läuft durch die Kette der Oder-Gatter bis zu dem ersten D-Flip-Flop, das den "HIGH"-Zustand gespeichert hat. Sie bewirkt, daß das Ausgangssignal am invertierenden Ausgang des D-Flip-Flop über das zugehörige NOR-Gatter zum jeweiligen Ausgang ACA durchgeschaltet wird. Dieses Ausgangssignal bei ACA veranlaßt über das zweite Flip-Flop FF2 in der in Fig. 1 gezeigten Schaltung das Auslesen der im zugehörigen Pufferspeicher B gespeicherten Daten an die Abnehmerleitung A. Das betreffende D-Flip-Flop sperrt gleichzeitig mit dem an seinem nichtinvertierenden Ausgang anstehenden Kennzustand "HIGH" die in der Serienschaltung folgenden D-Flip-Flops, da der Zustand "HIGH" nach dem Oder-Gatter erhalten bleibt. Nach dem Auslesen der Daten aus dem aktivierten Pufferspeicher wird in der Taktschaltung eine neue positive Flanke des Serienschaltsignals Ai erzeugt. Dadurch wird das D-Flip-Flop, das eben noch den Kennzustand "HIGH" aufwies, zurückgesetzt und nimmt den logischen Kennzustand "LOW" an. Wenn nun das Serienschaltsignal Ai erneut den logischen Kennzustand "LOW" annimmt, kann der nächste Pufferspeicher ausgelesen werden, dessen zugehöriges D-Flip-Flop den logischen Kennzustand "HIGH" gespeichert hat. Der so beschriebene Zyklus läuft solange ab, bis das letzte D-Flip-Flop der Serienschaltung zurückgesetzt worden ist, das den logischen Kennzustand "HIGH" aufwies. Mit der nächsten positiven Flanke des Serienschaltsignals Ai können dann erneut Eingangsdaten in die D-Flip-Flops DFF1...DFF16 übernommen werden. Diese Flanke fällt in das feste Raster der positiven Flanken des Serienschaltsignals Ai.

Bei gleichmäßiger Verteilung des Verkehrsaufkommens einer Abnehmerleitung über alle Zubringerleitungen ist das mit dieser Ausführungsform der Entscheiderschaltung ausführbare Verfahren als optimal anzusehen. Jedoch wird in der Praxis die Gleichverteilung des Verkehrsaufkommens über die Zubringerleitungen eher die Ausnahme als die Regel sein. Man muß vielmehr aufgrund des asynchronen Charakters der Blockerzeugung auch damit rechnen, daß durch momentane Verkehrsspitzen auf wenigen Zubringerleitungen Z die zugehörigen Pufferspeicher B zum Überlaufen gebracht werden. Dieser Gefahr kann dadurch begegnet werden, daß man die entsprechenden Pufferspeicher häufiger ausliest als die weniger belasteten. Die entsprechenden Pufferspeicher scheinen dann für den einlaufenden Paketstrom ein größeres Fassungsvermögen zu haben.

In Fig. 3 ist eine Ausführungsform einer Entscheiderschaltung dargestellt, bei welcher die stärker belasteten Pufferspeicher häufiger auslesbar sind. Dabei ist vorgesehen, daß ein zusätzliches Schwellwertkriterium in der Form ausgewertet wird, daß nicht nur ein Zählerstand gleich Null oder größer Null ausgewertet wird, sondern auch ein Zählerstand n, der größer ist als ein vorbestimmbarer Schwellwert k. Zu diesem Zweck hat jeder der Vorwärts-Rückwärts-Zählers VRZ1...VRZ16 zwei Ausgänge, die jeder auf eine Logikschaltung in der Entscheiderschaltung einwirken.

Die Funktionsweise und der Aufbau einer Logikschaltung, aus der die in Fig. 3 dargestellte Entscheiderschaltung aufgebaut ist, entspricht grundsätzlich der Funktionsweise einer Logikschaltung LCA, wie im Zusammenhang mit der in Fig. 2 gezeigten Entscheiderschaltung beschrieben worden ist.

Die Entscheiderschaltung weist ebenfalls in Serie liegende flankengetriggerte D-Flip-Flops auf, wobei jeweils der D-Eingang dieser D-Flip-Flops über eine UND-Schaltung mit einem Ausgang eines der Vorwärts-Rückwärts-Zähler verbunden ist und der nichtinvertierende Ausgang dieser D-Flip-Flops an ein ODER-Gatter und der invertierende Ausgang an ein NOR-Gatter angeschaltet ist. Eine Einheit mit einem D-Flip-Flop, einem UND-Gatter, einem ODER-Gatter und einem NOR-Gatter ist jeweils zu einer Logikschaltung zusammengefaßt, wobei die Logikschaltung LCA1 dem ersten Ausgang (n größer 0) und die Logikschaltung LCA2 dem zweiten Ausgang (n größer k) des Zählers VRZ1 zugeordnet ist. Die Ausgänge der beiden den Ausgängen eines der Vorwärts-Rückwärts-Zähler zugeordneten Logikschaltungen über ein ODER-Gatter zusammengefaßt sind, dies ist bei den dem Zähler zugeordneten Logikschaltungen LCA1 und LCA2 das ODER-Gatter ORV1.

Durch die Berücksichtigung eines zusätzlichen Signals aus jedem Zähler wird ein Pufferspeicher, der die Bedingung n größer k erfüllt, zwei Blöcke an die Abnehmerleitung A absetzen können, ehe der Zustand des nächsten Pufferspeichers abgefragt wird. Eine noch stärkere Berücksichtigung der unterschiedlichen Belastung einzelner Pufferspeicher kann dadurch erfolgen, daß weitere Schwellwertkriterien in die Entscheidung einbezogen werden. Außerdem können an einem Ausgang eines Zählers VRZ mit einem Ausgangssignal n größer k mehrere der vorbeschriebenen Logikschaltungen LCA parallel angeschlossen werden, so daß auf diese Art die Zahl der Zugriffe auf die Ausgangsleitung steigerbar ist. Außerdem ist es möglich, für jede der Zubringerleitungen einen anderen Wert für den Schwellwert k auszuwählen, so daß auf diese Weise statische Prioritäten vergeben werden können.

Der über das UND-Gatter U2 in der in Fig. 1 gezeigten Schaltungsanordnung als Auslese-Signal den Pufferspeicher aktivierende Kennzustand des Flip-Flops FF2 setzt über den Eingang R den Zähler VRZ zurück. Nach dem Auslesen der Daten aus einem aktivierten Pufferspeicher wird durch die positve Flanke des Serienschaltsignals Ai dasjenige D-Flip-Flop zurückgesetzt, das gerade den Zustand "HIGH" aufwies, indem der "LOW"-Zustand des Serienschaltsignals Ae eingelesen wird. Damit der nächste Pufferspeicher, dessen zugehöriges D-Flip-Flop in der Entscheiderschaltung den Kennzustand "HIGH" aufweist, ausgelesen werden kann, muß die negative Flanke des Pulses des Serienschaltsignals von Ai die ganze Kette der voraufgegangenen ODER-Gatter durchlaufen. Der Auslesevorgang wird durch die Aufsummierung der einzelnen Gatterlaufzeiten verzögert. Es ist daher anzustreben, diese Laufzeiten zu vermindern und hierdurch eine Beschleunigung der Auslesevorgänge zu bewirken.

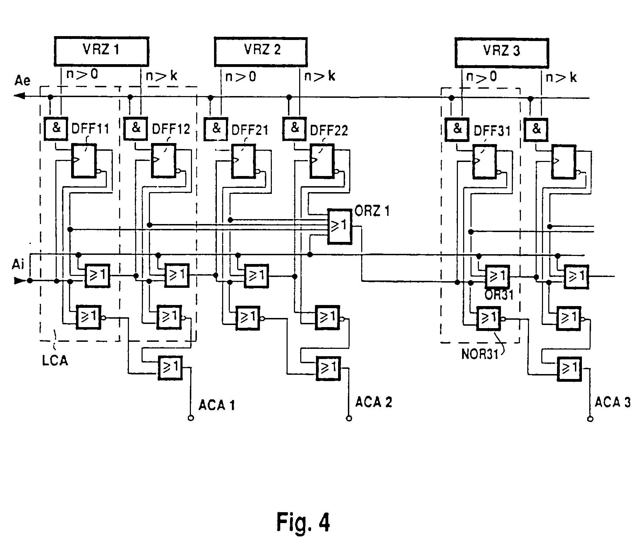

Eine Ausführungsform einer Entscheiderschaltung, bei welcher eine solche Verkürzung der Laufzeit erreicht ist, ist in Fig. 4 dargestellt. Auch bei dieser Anordnung ist jedem Ausgang eines Vorwärts-Rückwärts-Zählers eine Logikschaltung LCA mit einem D-Flip-Flop, einem UND-Gatter, einem ODER-Gatter und einem NOR-Gatter in der bereits im Zusammenhang mit Fig. 2 beschriebenen Konfiguration zugeordnet. Die den Ausgängen eines Zählers zugeordneten Ausgänge der Logikschaltungen sind ebenfalls über ein ODER-Gatter an einem zugehörigen Ausgang ACA1 usw. geführt. Zur Verbesserung der Übersichtlichkeit der Anordnung sind in Fig. 4 die entsprechenden Bezugszeichen weggelassen soweit sie nicht im folgenden erwähnt sind. Im Unterschied zu der in Fig. 3 gezeigten Schaltungsanordnung sind die nichtinvertierenden Ausgänge der D-Flip-Flops von jeweils vier benachbarten Logikschaltungen gruppenweise den Eingängen jeweils einer ODER-Schaltung zugeführt. Diese ODER-Schaltung weist einen weiteren Eingang auf, dem das Serienfortschaltsignal Ai zugeführt ist. Beim Ausführungsbeispiel sind die nichtinvertierenden Ausgänge der zu den beiden Zählern VRZ1 und VRZ2 gehörigen D-Flip-Flops DFF11, DFF12, DFF21, DFF22 an die Eingänge des ODER-Gatters ORZ1 angelegt. Weisen alle D-Flip-Flops den Kennzustand "LOW" auf, so muß die negative Flanke des Serienfortschaltsignals Ai nur die ODER-Schaltung ORZ1 durchlaufen und wird daher in dieser nur um diese Gatterlaufzeit verzögert. Diese Gatterlaufzeit ist die des ODER-Gatters ORZ1. Auf diese Art und Weise wird die Maximalzahl der Gatterlaufzeiten gegeben durch:

Zahl der Gruppen + Zahl der Flip-Flops pro Gruppe - 2. Diese Zahl erreicht ein Minimum, wenn die Anzahl der Gruppen gleich der Anzahl der D-Flip-Flops pro Gruppe wird.

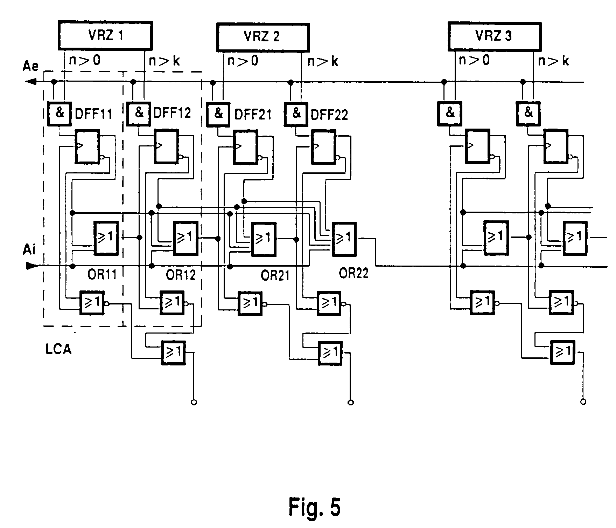

Eine andere Ausführungsform einer Entscheiderschaltung mit verkürzten Gatterlaufzeiten zeigt Fig. 5. Diese Entscheiderschaltung ist ebenfalls aus einzelnen Logikbaugruppen LCA mit jeweils einem D-Flip-Flop, einem UND-Gatter, einem ODER-Gatter und einem NOR-Gatter in der im wesentlichen bereits im Zusammenhang mit Fig. 3 beschriebenen Konfiguration aufgebaut. Die den Ausgängen eines Zählers zugeordneten Logikschaltungen LCA sind ebenfalls über ein ODER-Gatter verodert. Die nichtinvertierenden Ausgänge der D-Flip-Flops sind ebenfalls zu Gruppen zusammengefaßt. Im Hinblick auf die bereits im Zusammenhang mit Fig. 3 gegebenen Beschreibung sind aus Gründen der Übersichtlichkeit in Fig. 5 nur solche Bauelemente mit Bezugszeichen versehen, die nachfolgend besondere Erwähnung finden.

Bei der in Fig. 3 gezeigten Ausführungsform einer Entscheiderschaltung sind die nichtinvertierenden Ausgänge der D-Flip-Flops jeweils mit einem Eingang der ODER-Schaltung in der gleichen Logikschaltung verbunden. Bei der in Fig. 5 gezeigten Ausführungsform sind die nichtinvertierenden Ausgänge der D-Flip-Flops überdies noch an jeweils einen Eingang der nachfolgenden ODER-Schaltungen einer Gruppe angelegt. Somit ist der nichtinvertierende Ausgang des D-Flip-Flops DFF11 sowohl an der ODER-Schaltung OR11 wie auch an jeweils einen Eingang der in der Reihenfolge nachfolgenden ODER-Schaltungen OR12, OR21 und OR22 in den weiteren zu den den beiden Zählern VRZ1 und VRZ2 gehörigen Logikschaltungen der Gruppe angeschlossen. Somit steht beispielsweise der Kennzustand am Ausgang des ersten D-Flip-Flops DFF11 dieser Gruppe unmittelbar am letzten ODER-Gatter OR22 der gleichen Gruppe zur Verfügung. Die Laufzeit innerhalb einer Gruppe entspricht der Laufzeit in einem Gatter. Daher können nach diesem Muster auch alle Flip-Flops zu einer Gruppe mit nur einer Gatterlaufzeit Verzögerung für das Ai-Signal zusammengefaßt werden.

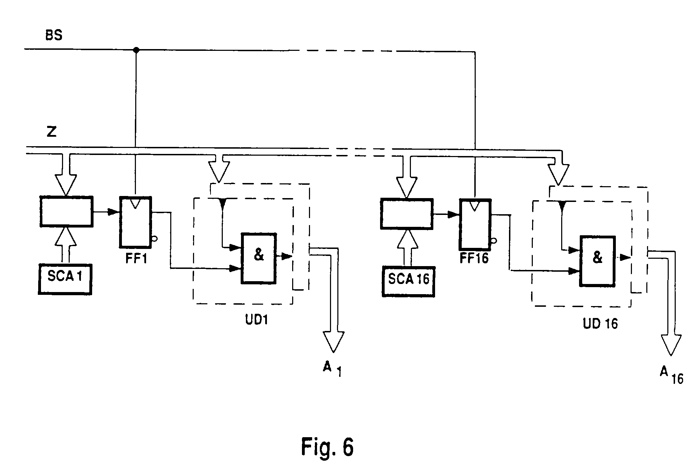

Wie bereits eingangs ausgeführt, ist eine in Fig. 1 dargestellte Baueinheit vorteilhaft als Konzentrator einsetzbar. Hierdurch wird eine Konzentrierung der Datenströme von m-Leitung auf eine Ausgangsleitung bewirkt. Für die Gegenrichtung wird dann eine weitere Baueinheit benötigt, welche es gestattet, die Daten, die von einer Eingangsleitung kommen entsprechend ihrer Weglenkungsinformation auf n-Ausgangsleitungen zu vermitteln. Dies entspricht einer Demultiplexerfunktion. Eine hierfür geeignete Schaltungsanordnung ist in Fig. 6 dargestellt. Die auf einer Zubringerleitung Z ankommenden Daten werden mehreren Schaltern (UND-Gatter UD1...UD16) angeboten. Die UND-Gatter schalten die Daten auf die Ausgangsleitungen A1...A16 in Abhängigkeit vom Wert der im zugehörigen Flip-Flop FF1...FF16 gespeicherten Werte des in den Vergleichern C durchgeführten Vergleichs der Wegelenkungsinformation mit den in den Speichern SCA1...SCA16 gespeicherten Adressen der Ausgangsleitungen A1...A16.

## Patentansprüche

1. Koppelfeld für ein nach dem asynchronen Zeitvielfachverfahren Blöcke übertragendes Vermittlungssystem, welches
- jeweils Pufferspeicher (B) zwischen Zubringerleitungen (Z1...,Zm) und Abnehmerleitungen (A) enthält,
- jeweils einen einem Pufferspeicher (B) zugeordneten Vergleicher enthält, der bei einer Übereinstimmung der Adresse der Abnehmerleitung (A) mit einer Wegelenkungsinformation zur Erzeugung eines Signals zum Einschreiben eines Blockes in den Pufferspeicher (B) vorgesehen ist, und
- eine Entscheiderschaltung (CA) enthält, die jeweils zur Festlegung der Auslesereihenfolge von Blöcken aus Pufferspeichern (B) bei mehrfacher Übereinstimmung von Adresse und Wegelenkungsinformation vorgesehen ist,
dadurch gekennzeichnet,
daß die Entscheiderschaltung (CA) zur Festlegung der Auslesereihenfolge der Blöcke aus den Pufferspeichern (B) anhand der Anzahl der in den jeweiligen Pufferspeichern (B) gespeicherten Blöcke vorgesehen ist.

2. Koppelfeld nach Anspruch 1,
dadurch gekennzeichnet,
daß jedem Pufferspeicher (B) ein Zähler (VRZ) zugeordnet ist, dem das vom Vergleicher (C) ermittelte Ergebnis des Vergleichs zwischen Weglenkungsinformation und Adresse der Abnehmerleitung (A) zugeführt wird und daß die Ausgänge der Zähler (VRZ) mit der Entscheiderschaltung (CA) verbunden sind, welche anhand der Ausgangswerte der Zähler die Reihenfolge festlegt, in der die Pufferspeicher (B) ausgelesen werden.

3. Koppelfeld nach Anspruch 2,
dadurch gekennzeichnet,
daß die Zähler (VRZ) als Vorwärts-Rückwärts-Zähler ausgebildet sind.

4. Koppelfeld nach einem der Ansprüche 2 oder 3,
dadurch gekennzeichnet,
daß jeder Vergleicher mit einem ersten Flip-Flop (FF1) verbunden ist, dessen Takteingang ein in der Vermittlungseinrichtung erzeugtes Blockstartsignal (BS) zugeführt ist und das ausgangsseitig an einem Eingang (V) des Zählers (VRZ) und an einem Eingang eines ersten UND-Gatters (U1) angeschlossen sind, an dessen zweitem Eingang ein in der Vermittlungseinrichtung erzeugtes Blocksynchronisiersignal (BB) anliegt,wobei der Ausgang des ersten UND-Gatters (U1) an einen Steuereingang des Pufferspeichers (B) geführt ist.

5. Koppelfeld nach Anspruch 4,
dadurch gekennzeichnet,
daß ein weiteres Flip-Flop (FF2) vorgesehen ist, das mit einem Ausgang der Entscheiderschaltung (CA) verbunden ist und dessen Takteingang das Blockstartsignal (BS) zugeführt ist und das ausgangsseitig über ein weiteres UND-Gatter (U2), an dem außerdem das Blocksynchronisationssignal (BB) anliegt, an einem weiteren Eingang des Pufferspeichers (B) angeschlossen ist, über den das Auslesen des Pufferspeichers ausgelöst werden kann.

6. Koppelfeld nach Anspruch 5,
dadurch gekennzeichnet,
daß das weitere Flip-Flop (FF2) ausgangsseitig mit einem weiteren Eingang (R) des Zählers (VRZ) verbunden ist.

7. Koppelfeld nach einem der Ansprüche 2 bis 6,
dadurch gekennzeichnet,
daß jedem Zähler (VRZ1...VRZ16) wenigstens eine Logikschaltung (LCA) zugeordnet ist, welche abhängig vom Kennzustand an dem mit ihr verbundenen Ausgang des Zählers das Auslesen des zugeordneten Pufferspeichers steuert.

8. Koppelfeld nach Anspruch 7,
dadurch gekennzeichnet,
daß jede Logikschaltung (LCA) einer Entscheiderschaltung (CA) ein Flip-Flop (DFF1...DFF16) aufweist, das eingangsseitig über ein UND-Gatter (U11...U16) mit dem zugeordneten Zähler (VRZ1...VRZ16) und ausgangsseitig einerseits an einer ODER-Schaltung (OCA1...OCA16) und andererseits an einer NOR-Schaltung (NOR1...NOR16) angeschlossen ist.

9. Koppelfeld nach Anspruch 8,
dadurch gekennzeichnet,
daß dem Takteingang der ersten Flip-Flop-Schaltung (DFF1), einem Eingang der ersten ODER-Schaltung (OCA1) und einem Eingang der letzten ODER-Schaltung (OCA16) sowie einem Eingang der ersten NOR-Schaltung (NOR1) einer Entscheiderschaltung (CA) ein erstes in der Vermittlungseinrichtung erzeugtes Serienfortschaltsignal (Ai) zugeführt ist und daß die ODER-Schaltung (OCA1. .....OCA15) ausgangsseitig jeweils mit einem Eingang der jeweils nachfolgenden ODER-Schaltung (OCA2...OCA16) verbunden sind, wobei die letzte ODER-Schaltung (OCA16) ein zweites Serienfortschaltsignal (Ae) abgibt, welches den zweiten Eingängen der UND-Schaltungen (U1...U16) zugeführt ist.

10. Koppelfeld nach einem der Ansprüche 7 bis 9,
dadurch gekennzeichnet,
daß Zähler (VRZ1...) mehr als einen Ausgang aufweisen, wobei an einem ersten Ausgang ein Signal anliegt, wenn der Zählerstand größer Null ist und an einem weiteren Eingang ein Signal anliegt, wenn der Zählerstand größer als ein vorbestimmbarer Schwellenwert ist und daß jedem Ausgang eines Zählers (VRZ1...) je eine Logikschaltung (LCA1, LCA2...) mit einem UND-Gatter (U11...), einer Flip-Flop-Schaltung (DFF11...), einer ODER-Schaltung (OR11...) und einem NOR-Gatter (NOR11...) zugeordnet ist und die Ausgänge der einem Zähler zugeordneten Logikschaltungen über eine ODER-Schaltung (ORV1...) an die Steuerlogikschaltung für den zugehörigen Pufferspeicher (B) angeschlossen sind.

11. Koppelfeld nach Anspruch 10,
dadurch gekennzeichnet,
daß einem weiteren Ausgang eines Zählers (VRZ1...), an dem ein Signal anliegt, wenn der Zählerstand einen Wert aufweist, der größer ist als ein vorbestimmbarer Schwellenwert, mehr als eine Logikschaltung angeschlossen ist.

12. Koppelfeld nach einem der Ansprüche 8 bis 11,
dadurch gekennzeichnet,
daß jeweils mehrere Logikschaltungen (LCA) einer Entscheiderschaltung (CA) Gruppen bilden, in dem alle Flip-Flop-Schaltung (DFF11...DF22) einer Gruppe ausgangsseitig an einer ODER-Schaltung (ORC) angeschlossen sind, welche einen weiteren Eingang aufweist, an dem das Serienfortschaltsignal (Ai) angeschlossen ist und die ausgangsseitig mit dem Takteingang der Flip-Flop-Schaltung (DFF31) sowie mit der ODER-Schaltung (OR31) und der NOR-Schaltung (NOR31) der nachfolgenden Logikschaltung verbunden ist.

13. Koppelfeld nach einem der Ansprüche 8 bis 11,
dadurch gekennzeichnet,
daß jeweils mehrere Logikschaltungen (LCA) einer Entscheiderschaltung (CA) Gruppen bilden, indem die FlipFlop-Schaltungen (DFF11...DFF21) einer Gruppe mit Ausnahme der letzten Flip-Flop-Schaltung (DFF22) dieser Gruppe ausgangsseitig jeweils mit einem Eingang der auf die erste ODER-Schaltung (OR11) dieser Gruppe folgenden weiteren ODER-Schaltung (OR12, OR21, OR22) dieser Gruppe angeschlossen sind, wobei das Serienfortschaltsignal (Ai) an einem weiteren Eingang jeder dieser ODER-Schaltung (OR11...OR22) einer Gruppe angelegt ist und der Ausgang der letzten ODER-Schaltung (OR22) einer Gruppe mit dem Eingang für das Serienfortschaltsignal der nächsten Gruppe verbunden ist.

## Claims

1. Switching network for a switching system in which blocks are transmitted in accordance with time-division multiplex, which
- comprises a buffer store (B) between incoming trunks (Z1, ..., Zₘ) and outgoing trunks (A),
- comprises a comparator assigned to a buffer store (B), which comparator, when the address of the outgoing trunk (A) corresponds to a routing identification code, generates a signal for writing a block in the buffer store (B), and
- comprises a decision circuit (CA) which determines the order in which blocks are to be read out from buffer stores (B) in the case of multiple correspondence between address and routing information, characterized in that the decision circuit (CA) determines the order in which the blocks are read out from the buffer stores (B) on the basis of the blocks stored in the respective buffer stores (B).

2. Switching network as claimed in Claim 1, characterized in that each buffer store (B) is assigned a counter (VRZ) which is supplied with the result of the comparison between routing identification code and address of the outgoing trunk (A) determined by the comparator (C) and in that the outputs of the counters (VRZ) are connected to the decision circuit (CA) which determines the order in which the buffer stores (B) are read via the output values of the counters.

3. Switching network as claimed in Claim 2, characterized in that the counters (VRZ) are structured as up-downcounters.

4. Switching network as claimed in one of the Claims 2 or 3, characterized in that each comparator is connected to a first flip-flop (FF1), the clock input of which is supplied with a block start signal (BS) generated in the switching network and the output of which is connected to an input (V) of the counter (VRZ) and to one input of a first AND gate (U1), at whose second input a block synchronizing signal (BB) generated in the switching network is present, the output of the first AND gate (U1) being connected to a control input of the buffer store (B).

5. Switching network as claimed in Claim 4, characterized in that a further flip-flop (FF2) is provided which is connected to an output of the decision circuit (CA) and whose clock input is supplied with the block start signal (BS) and whose output is connected via a further AND gate (U2), at which the block synchronizing signal (BB) is also present, to a further input of the buffer store (B) via which the reading of the buffer store can be triggered.

6. Switching network as claimed in Claim 5, characterized in that the further flip-flop (FF2) is connected at the output to a further input (R) of the counter (VRZ).

7. Switching network as claimed in one of the Claims 2 to 6, characterized in that each counter (VRZ1 ... VRZ16) is assigned at least one logic circuit (LCA) which controls the reading of the assigned buffer store in dependence on the value of the count output of the counter connected to it.

8. Switching network as claimed in Claim 7, characterized in that each logic circuit (LCA) of a decision circuit (CA) includes a flip-flop (DFF1, ..., DFF16), whose input is connected via an AND gate (U11, ..., U16) to the assigned counter (VRZ1 ... VRZ16) and whose output is connected to an OR circuit (OCA1 ... OCA16) and to a NOR circuit (NOR1 ... NOR16).

9. Switching network as claimed in Claim 8, characterized in that the clock input of the first flip-flop (DFF1), one input of the first OR circuit (OCA1) and one input of the last OR circuit (OCA16) and one input of the first NOR circuit (NOR1) of a decision circuit (CA) are supplied with a first series stepping signal (Ai) generated in the switching network and in that the OR circuits (OCA1 ... OCA15) are in each case connected at their output to one input of a following OR circuit (OCA2 ... OCA16), the last OR circuit (OCA16) outputting the second series stepping signal (Ai) which is supplied to the second inputs of the AND circuits (U1 ... U16).

10. Switching network as claimed in one of the Claims 7 to 9, characterized in that counters (VRZ1...) have more than one output, a signal being present at the first output when the count is greater than zero and a signal being present at a further output when the count is greater than a predeterminable threshold value, and in that each output of a counter (VRZ1 ...) is assigned one logic circuit (LCA1, LCA2, ...), the latter having an AND gate (U11 ...), a flip-flop (DFF11 ...), an OR circuit (OR11 ...) and a NOR gate (NOR11...), and the outputs of the logic circuits assigned to a counter are connected via an OR circuit (ORV1 ...) to the control logic circuit for the associated buffer store (B).

11. Switching network as claimed in Claim 10, characterized in that more than one logic circuit is connected to a further output of a counter (VRZ1 ...) at which a signal is present when the count has a value that is greater than a predeterminable threshold value.

12. Switching network as claimed in one of the Claims 8 to 11, characterized in that the logic circuits (LCA) of a decision circuit (CA) form groups, in which all the flip-flops (DFF11 ... DFF22) of a group are connected at the output to an OR circuit (ORC) which has a further input to which the series stepping signal (Ai) is applied and which is connected at the output to the clock input of the flip-flop (DFF31) and to the OR circuit (OR31) and to the NOR circuit (NOR31) of the subsequent logic circuit.

13. Switching network as claimed in one of the Claims 8 to 11, characterized in that the logic circuits (LCA) of a decision circuit (CA) form groups, the flip-flops (DFF11 .... DFF21) of a group, with the exception of the last flip-flop (DFF22) of this group being connected at the output to one input of a further OR circuit (OR12, OR21, OR22) of this group following the first OR circuit (OR11) of this group, the series stepping signal (Ai) being applied to a further input of each of these OR circuits (OR11 ... OR22) of a group and the output of the last OR circuit (OR22) of a group being connected to the input for the series stepping signal of the subsequent group.

## Revendications

1. Réseau de commutation pour un système de commutation transmettant des blocs selon le procédé de multiplexage temporel asynchrone, qui :
- contient respectivement des mémoires tampons (B) entre des lignes entrantes (Z1 ... Zm) et des lignes sortantes (A);
- contient respectivement un comparateur affecté à une mémoire tampon (B), ledit comparateur étant destiné, lorsque l'adresse de la ligne sortante (A) coïncide avec une information d'acheminement, à produire un signal pour mémoriser un bloc dans la mémoire tampon (B), et
- contient un circuit de décision (CA), qui est destiné respectivement à fixer la séquence d'extraction de blocs de mémoires tampons en cas de coïncidence multiple d'adresse et d'informations d'acheminement,
caractérisé en ce que le circuit de décision (CA) est prévu pour fixer la séquence d'extraction des blocs des mémoires tampons (B) sur la base du nombre de blocs mémorisés dans les mémoires tampons respectives.

2. Réseau de commutation selon la revendication 1, caractérisé en ce que, à chaque mémoire tampon (B) est affecté un compteur (VRZ), auquel est acheminé le résultat, déterminé par le comparateur (C), de la comparaison entre les informations d'acheminement et l'adresse de la ligne sortante (A) et en ce que les sorties des compteurs (VRZ) sont connectées au circuit de décision (CA), qui fixe, sur la base des valeurs de sortie des compteurs, la séquence selon laquelle les mémoires tampons (B) font l'objet d'une lecture d'extraction.

3. Réseau de commutation selon la revendication 2, caractérisé en ce que les compteurs (VRZ) se présentent sous la forme de compteurs-décompteurs.

4. Réseau de commutation selon l'une ou l'autre des revendications 2 ou 3, caractérisé en ce que chaque comparateur est connecté à une première bascule (FF1) à l'entrée d'horloge de laquelle est acheminé un signal de départ de bloc (BS) produit dans le dispositif de commutation et qui est raccordé, côté sortie, à une entrée (V) du compteur (VRZ) et à une entrée d'une première porte ET (U1), à la deuxième entrée de laquelle s'applique un signal de synchronisation de bloc (BB) produit dans le dispositif de commutation, la sortie de la première porte ET (U1) étant acheminée à une entrée de commande de la mémoire tampon (B).

5. Réseau de commutation selon la revendication 4, caractérisé en ce qu'il est prévu une autre bascule (FF2), qui est connectée à une sortie du circuit de décision (CA) et à l'entrée d'horloge de laquelle est acheminé le signal de départ de bloc (BS) et qui est connectée, côté sortie, via une autre porte ET (U2) sur laquelle s'applique, en outre, le signal de synchronisation de bloc (BB), à une autre entrée de la mémoire tampon (B), par laquelle l'extraction de la mémoire tampon peut être déclenchée.

6. Réseau de commutation selon la revendication 5, caractérisé en ce que l'autre bascule (FF2) est connectée, côté sortie, à une autre entrée (R) du compteur (VRZ).

7. Réseau de commutation selon l'une quelconque des revendications 2 à 6, caractérisé en ce qu'à chaque compteur (VRZ1 ... VRZ16) est affecté au moins un circuit logique (LCA), qui commande l'extraction de la mémoire tampon associée en fonction de l'état caractéristique à la sortie du compteur qui y est raccordé.

8. Réseau de commutation selon la revendication 7, caractérisé en ce que chaque circuit logique (LCA) d'un circuit de décision (CA) comporte une bascule (DFF1 ... DFF16), qui est raccordée, côté entrée, via une porte ET (U11 ... U16), au compteur (VRZ1 ... VRZ16) qui lui est affecté et, côté sortie, d'une part, à un circuit OU (OCA1 ... OCA16) et, d'autre part, à un circuit NON-OU (NOR1 ... NOR16).

9. Réseau de commutation selon la revendication 8, caractérisé en ce qu'à l'entrée d'horloge du premier circuit à bascule (DFF1), à une entrée du premier circuit OU (OCA1) et à une entrée du dernier circuit OU (OCA16) ainsi qu'à une entrée du premier circuit NON-OU (NOR1) du circuit de décision (CA) est acheminé un premier signal de commutation sériel (Ai) produit dans le dispositif de commutation et en ce que le circuit OU (OCA1 ... OCA15) est connecté, côté sortie, respectivement, à une entrée du circuit OU respectivement suivant (OCA2 ... OCA16), le dernier circuit OU (OCA16) délivrant un deuxième signal de commutation sériel (Ae), qui est acheminé aux deuxièmes entrées des circuits OU (U1 ... U16).

10. Réseau de commutation selon l'une quelconque des revendications 7 à 9, caractérisé en ce que les compteurs (VRZ1 ...) comportent plus d'une sortie, un signal étant appliqué à une première sortie lorsque le comptage est supérieur à zéro et un signal s'appliquant à une autre entrée lorsque le comptage est supérieur à une valeur de seuil prédéterminable, et en ce qu'à chaque sortie d'un compteur (VRZ1 ...) est affecté respectivement un circuit logique (LCA1, LCA2 ...) avec une porte ET (U11 ...), un circuit à bascule (DFF11 ...), un circuit OU (OR11 ...) et une porte NON-OU (NOR11 ...), et les sorties des circuits logiques affectées à un compteur sont connectées au circuit logique de commande pour les mémoires tampons associées (B) via une porte OU (ORV1 ...).

11. Réseau de commutation selon la revendication 10, caractérisé en ce qu'à une autre sortie d'un compteur (VRZ1 ...), auquel un signal est appliqué lorsque le comptage présente une valeur qui est supérieure à une valeur de seuil prédéterminable, plus d'un circuit logique est raccordé.

12. Réseau de commutation selon l'une quelconque des revendications 8 à 11, caractérisé en ce que, respectivement, plusieurs circuits logiques (LCA) d'un circuit de décision (CA) forment des groupes, par connexion de tous les circuits à bascule (DFF11 ... DFF22) d'un groupe, côté sortie, à une porte OU (ORC), qui présente une autre entrée à laquelle le signal de commutation sériel (Ai) est connecté, et qui est raccordé, côté sortie, à l'entrée d'horloge du circuit de bascule (DFF31) ainsi qu'au circuit OU (OR31) et au circuit NON-OU (NOR 31) du circuit logique suivant.

13. Réseau de commutation selon l'une quelconque des revendications 8 à 11, caractérisé en ce que, respectivement, plusieurs circuits logiques (LCA) d'un circuit de décision (CA) forment des groupes, par connexion de tous les circuits à bascule (DFF11 ... DFF21) d'un groupe, à l'exception du dernier circuit à bascule (DFF22) de ce groupe, côté sortie, respectivement, à une entrée de l'autre circuit OU (OR12, OR21, OR22) de ce groupe suivant la première porte OU (OR11) de ce groupe, le circuit de commutation sériel (Ai) étant appliqué à une autre entrée de chacun de ces circuits OU (OR11 ... OR22) d'un groupe et la sortie du dernier circuit OU (OR22) d'un groupe étant raccordée à l'entrée pour le signal de commutation sériel du groupe suivant.
